# EUROPÄISCHE PATENTSCHRIFT

(11) **EP 0 849 567 B1**
(45) Veröffentlichungstag und Bekanntmachung des Hinweises auf die Patenterteilung: **07.06.2006**
(21) Anmeldenummer: 97121821.9
(22) Anmeldetag: 11.12.1997
(51) Int. Cl.: G01D 5/38, G02B 5/18

(54) **Lichtelektrische Positionsmesseinrichtung**
Light-electrical position measuring device
Dispositif optique de mesure de positions

(30) Priorität: 17.12.1996 DE 19652563
(43) Veröffentlichungstag der Anmeldung: 24.06.1998
(73) Patentinhaber: Dr. Johannes Heidenhain GmbH, 83292 Traunreut (DE)
(72) Erfinder: Speckbacher, Peter Dr., 84558 Kirchweidach (DE); Allgäuer, Michael, Dipl.-Ing., 83371 Stein/Traun (DE); Flatscher, Georg, Dr., 83458 Schneizlreuth (DE); Sailer, Anton, 83278 Traunstein (DE); Kern, Walburga, 83301 Traunreut (DE)

(56) Entgegenhaltungen:
- EP-A- 0 323 238
- EP-A- 0 590 163
- EP-A- 0 741 282
- GB-A- 2 164 492
- US-A- 5 333 048

## Beschreibung

Die Erfindung betrifft eine lichtelektrische Positionsmeßeinrichtung zur Messung der Lage zweier relativ zueinander beweglicher Objekte mit Hilfe von Lichtstrahlenbeugung an einem Beugungsgitter gemäß dem Oberbegriff des Anspruchs 1.

Aus der EP 0 741 282 A2 ist eine Positionsmesseinrichtung mit den Merkmalen des Oberbegriffs des Anspruchs 1 bekannt. Dabei sind die Beugungsgitter transparent ausgebildet und für den Flankenwinkel der Stege ist ein Toleranzbereich von 90° - 20° angegeben.

Positionsmeßeinrichtungen mit reflektierenden Maßstäben und reflektierende Maßstäbe dafür sind beispielsweise aus der DE 43 29 627 A1 und der DE 43 03 975 A1 bekannt.

Der Erfindung liegt die Aufgabe zugrunde, eine hochauflösende lichtelektrische Positionsmeßeinrichtung anzugeben, deren Abtastsignale einen hohen Modulationsgrad aufweisen und die einfach herstellbar ist.

Diese Aufgabe wird von einer Positionsmeßeinrichtung mit den Merkmalen des Anspruches 1 gelöst.

Ein Vorteil der erfindungsgemäßen Positionmeßeinrichtung ist darin zu sehen, daß der Modulationsgrad auch bei relativ geringer Leistung der Lichtquelle noch sehr gut ist. Der Einsatz einer Lichtquelle mit geringer Leistung hat den weiteren Vorteil, daß die Erwärmung der gesamten Meßeinrichtung verringert wird, wodurch die Meßgenauigkeit und Langzeitstabilität erhöht wird. Ein weiterer Vorteil der Erfindung besteht darin, daß die zulässigen Toleranzen der Parameter, wie Lichtwellenlänge der Lichtquelle, Teilungsperiode und Steg-Lückenverhältnis sowie Stufenhöhe des Beugungsgitters relativ groß sind.

Vorteilhafte Ausgestaltungen der Positionsmeßeinrichtung sind in den abhängigen Ansprüchen angegeben.

Mit Hilfe der Zeichnungen wird die Erfindung näher erläutert.

Es zeigt
- Figur 1: eine erste erfindungsgemäße Positionsmeßeinrichtung schematisch in dreidimensionaler Ansicht,
- Figur 2: eine weitere Positionsmeßeinrichtung im Schnitt,
- Figur 3: den Maßstab der Positionsmeßeinrichtung gemäß den Figuren 1 und 2 im Schnitt,
- Figur 4: eine Funktion der Beugungseffizienz in Abhängigkeit vom Flankenwinkel der Stege des Maßstabes,
- Figur 5: eine Funktion des Flankenwinkels in Abhängigkeit von der Steghöhe und
- Figur 6: eine Funktion des Verhältnisses der Stegbreite zur Teilungsperiode in Abhängigkeit von der Steghöhe.

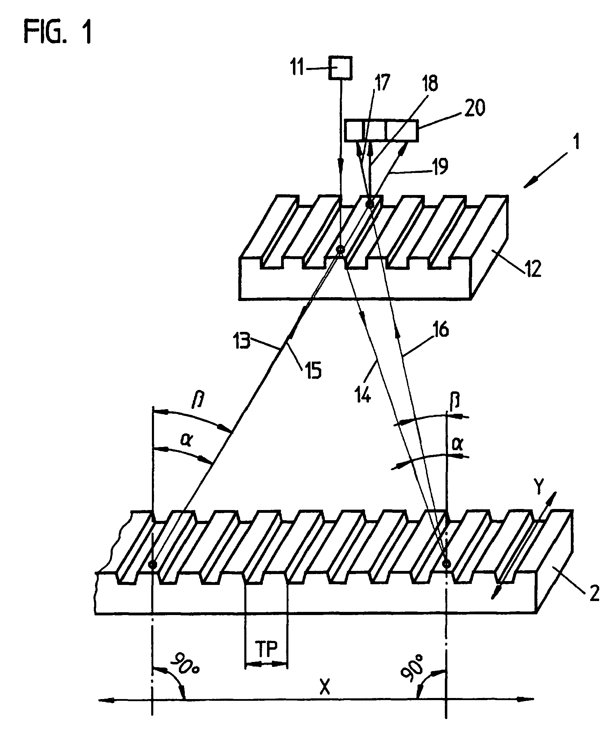

In Figur 1 ist eine Positionsmeßeinrichtung gemäß der Erfindung schematisch dargestellt. Die Positonsmeßeinrichtung besteht aus einer Abtasteinheit 1 und einem relativ dazu in Meßrichtung X verschiebbaren Maßstab 2. Die Abtasteinheit 1 ist an einem ersten Objekt und der Maßstab 2 an einem zweiten Objekt befestigt, um die Relativlage der beiden Objekte zu messen.

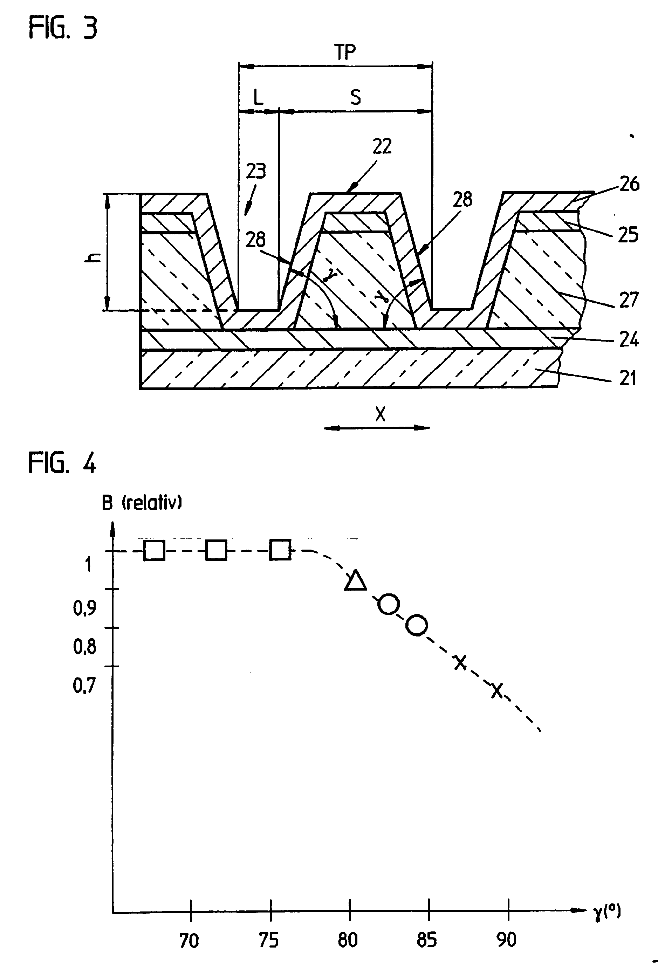

Die Abtasteinheit 1 besteht aus einer Lichtquelle in Form eines HalbleiterLasers 11, dessen Licht auf einen Strahlteiler 12 trifft und dort in die zwei Teilstrahlenbündel 13 und 14 aufgespalten wird. Im gezeigten Beispiel ist der Strahlteiler 12 ein Beugungsgitter, welches das auftreffende Licht in die zwei Teilstrahlenbündel 13 und 14 beugt, wobei das Teilstrahlenbündel 13 die -1. Beugungsordnung und das Teilstrahlenbündel 14 die +1. Beugungsordnung ist. Die Teilstrahlenbündel 13 und 14 treffen in Meßrichtung X voneinander beabstandet auf den Maßstab 2 auf und werden wiederum gebeugt. Der Maßstab 2 ist ein Beugungsgitter in Form eines Phasengitters, das anhand der Figuren 3 bis 6 näher erläutert wird. Das Teilstrahlenbündel 13 wird am Maßstab 2 in die -1. Beugungsordnung gebeugt, welche unter dem gleichen Winkel β austritt, wie das Teilstrahlenbündel 13 auf den Maßstab 2 auftrifft. Der Eintrittswinkel ist mit dem Bezugszeichen α und das gebeugte Teilstrahlenbündel ist mit dem Bezugszeichen 15 bezeichnet. Das Teilstrahlenbündel 14 wird ebenfalls am Maßstab 2 gebeugt, wobei auch hier das gebeugte Teilstrahlenbündel 16 (-1. Beugungsordnung) unter dem gleichen Winkel β austritt, unter dem das Teilstrahlenbündel 14 auftrifft. Der Eintrittswinkel ist ebenfalls mit dem Bezugszeichen α bezeichnet. Die gebeugten Teilstrahlenbündel 15 und 16 gleicher Beugungsordnungen interferieren am Strahlteiler 12 miteinander. Die am Strahlteiler 12 interferierenden und gebeugten Teilstrahlenbündel 17 bis 19 treffen auf die Detektoreinrichtung 20, von der sie in elektrische Meßsignale umgewandelt werden, die zueinander phasenverschoben sind.

Wie aus Figur 1 ersichtlich ist, trifft das Licht des Lasers 11 an einem Punkt auf den Strahlteiler 12, der senkrecht zur Meßrichtung X vom Schnittpunkt der beiden Strahlen 15 und 16 beabstandet ist, durch diese Maßnahme ist eine sichere Strahltrennung mit einfachem Aufbau gewährleistet.

Die Eintrittswinkel α und Austrittswinkel β beziehen sich auf die Normale der Meßrichtung X. Die Teilstrahlenbündel 13 und 15 liegen somit in einer Ebene, die gegenüber der Oberfläche des Maßstabes 2 um den Winkel (90°-α) geneigt ist, das gleiche gilt für die Ebene, die von den Teilstrahlenbündeln 14 und 16 aufgespannt wird. Die Beziehung α=β wird auch Littrow-Bedingung genannt, wobei der Winkel α Littrow-Winkel genannt wird. Bei der Littrow-Bedingung ist die Intensität der gebeugten P-polarisierten Teilstrahlenbündel 15 und 16 besonders groß und der Aufbau der Positionsmeßeinrichtung besonders einfach. Dies gilt insbesondere, wenn die Teilungsperiode TP des Maßstabes 2 etwa gleich oder kleiner der Lichtwellenlänge λ des Lasers 11 ist. Für die Littrow-Bedingung gilt dabei allgemein α=arc sin λ/2TP. Für λ=670 nm, TP=512 nm ist α etwa 40°.

Die auf das Phasengitter 2 auftreffenden Teilstrahlenbündel 13, 14 sind linear polarisiert und die Polarisation ist so ausgerichtet, daß möglichst der gesamte elektrisch polarisierte Anteil des Lichtes in der Einfallsebene (X, Y-Ebene) liegt, also P-polarisiert ist. Dieser Lichtanteil entspricht bezüglich des Phasengitters 2 der TM-Polarisation, wobei die Projektion dieses Anteils auf das Phasengitter 2 in Meßrichtung X ausgerichtet ist. Diese Ausrichtung der Polarisation erfolgt durch Drehen des Lasers 11 und/oder durch Einfügen von Optiken, welche die Polarisation der Teilstrahlenbündel 13, 14 entsprechend beeinflußt. Damit die Amplituden der von der Detektoreinrichtung 20 erhaltenen Meßsignale besonders groß sind, muß die Beugungseffizienz des Maßstabes 2 groß sein. Gemäß der Erfindung erfolgt hierzu eine Optimierung, wie anhand der Figuren 3 bis 6 noch erläutert wird.

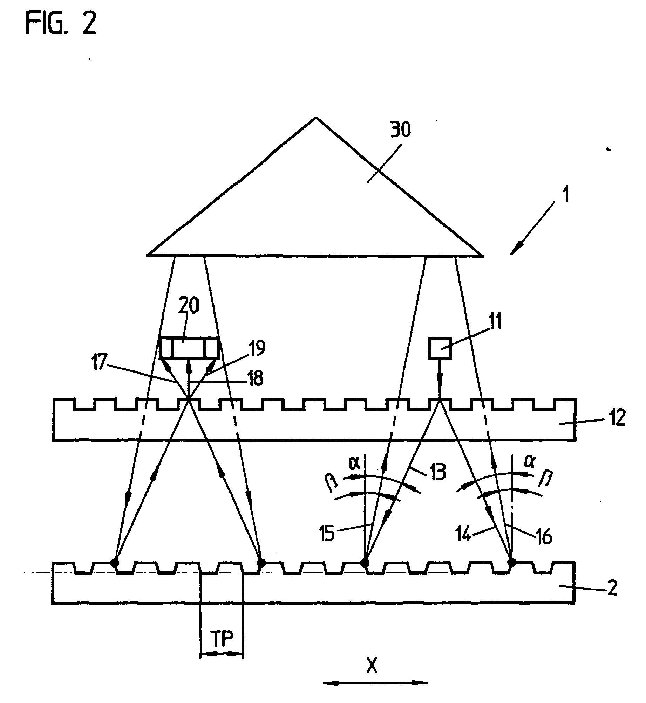

Figur 2 zeigt eine weitere Positionsmeßeinrichtung mit einem Maßstab·2, einem Strahlteiler 12, einem Laser 11 und einer Detektoreinrichtung 20. Der optische Strahlengang entspricht weitgehend dem Beispiel gemäß Figur 1, mit dem Unterschied, daß die am Maßstab 2 gebeugten Teilstrahlenbündel 15 und 16 mittels eines Umlenkelementes 30 - insbesondere einem Tripelprisma - derart umgelenkt werden, daß sie ein zweites Mal auf den Maßstab 2 treffen, dort wiederum in die +1. und -1. Beugungsordnungen gebeugt werden und erst diese Teilstrahlenbündel wie in Figur 1 am Strahlteiler 12 interferieren und auf die Detektoreinrichtung 20 treffen. Durch die zweimalige Beugung am Maßstab 2 erhält man Meßsignale mit einer Periode von 1/4 TP, also die doppelte Auflösung im Vergleich zur Meßeinrichtung gemäß Figur 1. Auch bei diesem Aufbau ist es besonders vorteilhaft, wenn für jedes der vier auf den Maßstab 2 treffenden Teilstrahlenbündel die Littrow-Bedingung eingehalten wird, das heißt, daß der Einfallswinkel α zumindest annähernd dem Austrittswinkel β entspricht. Auch bei diesem Beispiel gilt, daß der Maßstab 2 ein Phasengitter ist, dessen Teilungsperiode TP etwa gleich oder kleiner der Lichtwellenlänge λ des Lasers 11 ist. Aus Gründen der Übersichtlichkeit ist der Strahlengang im Tripelprisma 30 nicht dargestellt und die Teilstrahlenbündel, welche vom Strahlteiler 12 nicht beeinflußt werden, sind im Bereich des Strahlenteilers 12 gestrichelt eingezeichnet.

Figur 3 zeigt einen Schnitt durch den Maßstab 2. Der Maßstab 2 besteht aus einem Substrat 21 - insbesondere Glas oder Glaskeramik - mit dem Phasengitter in Form von Stegen 22 und Lücken 23. Auf dem Substrat 21 ist eine durchgehende Schicht 24 als Ätzstopp aufgebracht, z.B. Chrom. Die Stege 22 bestehen vorzugsweise aus einem Dielektrikum 27, z.B. Siliziumdioxid, Titandioxid, Tantalpentoxid oder Aluminiumoxid. Als Maske zum Ätzen der Lücken 23 ist partiell eine ätzresistente Schicht 25 vorgesehen, die beispielsweise aus Titanoxid besteht. Die gesamte Reliefstruktur ist mit einer reflektierenden Schicht 26 überzogen, die eine elektrisch leitende Metallschicht, insbesondere eine Chromschicht ist. Die Beschichtung kann mittels Sputtern erfolgen.

Dieser Schichtaufbau ist nur als Beispiel dargestellt und für die Erfindung nicht zwingend erforderlich. Das Substrat kann auch ein Metallband sein, wobei insbesondere dann die Schicht 24 entfallen kann. Wesentlich bei dem erfindungsgemäßen Phasengitter ist, daß die Lücken 23, die Stege 22 und die Flanken 28 reflektierend sind.

Bei Maßstäben 2 für lichtelektrische Positionsmeßsysteme wurde bisher versucht, die Lücken 23 so herzustellen, daß die Flanken 28 senkrecht zur Meßrichtung X verlaufen. Bei der Erfindung wurde nun erkannt, daß die Beugungseffizienz bei einem Flankenwinkel γ ungleich 90° besonders groß ist, das heißt, daß bei einem Positionsmeßsystem gemäß den Figur 1 oder 2 ein Maßstab 2 mit einem symmetrischen trapezförmigen Phasengitter einen besonders hohen Wirkungsgrad besitzt.

In Figur 4 ist hierzu die Funktion der Beugungseffizienz B der transversal magnetischen Mode TM in Abhängigkeit vom Flankenwinkel γ der Stege 22 aufgetragen. Dieser Verlauf wurde durch eine Reihe von Versuchen bestätigt. Eine besonders gute Beugungseffizienz für die ersten Beugungsordnungen 15, 16 erhält man somit bei einem Flankenwinkel γ von kleiner 80°. Dieser Flankenwinkel von kleiner 80°, insbesondere 70 ± 10° läßt sich besonders genau durch ein Trockenätzverfahren oder Naßätzverfahren erreichen.

Als Material der Stufen 27 eignet sich insbesondere auch kristallines Silizium, bei dem der Flankenwinkel γ beispielsweise durch ein Naßätzverfahren über die Kristallorientierung eingestellt werden kann. Die Lage der zu ätzenden Reliefstruktur in Bezug zur Kristallorientierung bestimmt den Flankenwinkel γ. Wird als Material für den Maßstab 2 ein 110-Silizium-Wafer verwendet, und werden die Lücken 23 parallel zur Kristallorientierung geätzt (Kristallorientierung=Y-Richtung), so ergibt sich aufgrund der unterschiedlichen Ätzraten in den verschiedenen Kristallrichtungen ein Flankenwinkel γ von 67°. Bei diesem anisotropen Ätzen eines 110-Si-Wafers, insbesondere mit KOH, ergibt sich somit der geforderte Flankenwinkel γ besonders genau und reproduzierbar. Die geätzte Oberfläche (Stege, Lücken und Flanken) des Siliziums wird nachfolgend mit einer reflektierenden und elektrisch leitenden Schicht 26 beschichtet. Denkbar ist auch die Verwendung anderer Halbleiterkristalle wie beispielsweise Germanium (Ge) oder Gallium-Arsenid (GaAs).

Das erfindungsgemäß ausgebildete Phasengitter 2 kann auch durch Prägeverfahren hergestellt werden, wobei die Reliefstruktur z.B. direkt in eine reflektierende Metallschicht geprägt wird oder die Reliefstruktur in nichtreflektierende prägbare Materialien geprägt und anschließend mit einer reflektierenden Schicht überzogen wird.

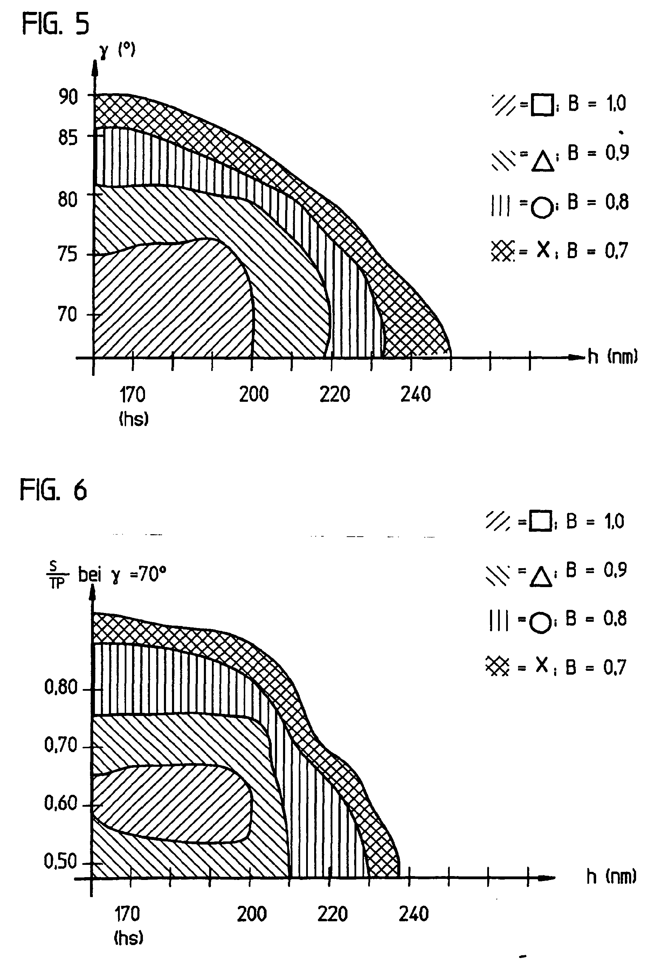

In Figur 5 ist eine Funktion des Flankenwinkels γ in Abhängigkeit von der Steghöhe h für die relativen Beugungseffizienzen B von 1, weiterhin für B=0,9, B=0,8 und B=0,7 aufgetragen. Daraus ist ersichtlich, daß die Toleranz für die Steghöhe h gerade für einen Flankenwinkel γ von kleiner 80° bei hoher Beugungseffizienz besonders groß ist. Bei dem Positionsmeßsystem gemäß Figur 1 und Figur 2 ergibt sich theoretisch eine geforderte Steghöhe hs=λ/4. Bei λ=670 nm sollte hs somit etwa 170 nm sein. In beiden Fällen erzeugt das Phasengitter in der Summe eine optische Weglängendifferenz der auftreffenden Strahlen von λ/2. In Figur 5 sind die experimentell ermittelten Verhältnisse für das Positionsmeßsystem gemäß Figur 2 beispielsweise dargestellt. Der relative Modulationsgrad von etwa 1 wird bis zu einer Steghöhe von etwa 200 nm erreicht. Die Toleranz für die Steghöhe h ist somit relativ groß.

In Figur 6 ist eine Funktion des Verhältnisses der Stegbreite S zur Teilungsperiode TP (beispielsweise 512 nm) in Abhängigkeit von der Steghöhe h bei einem Flankenwinkel γ=70° für die vier relativen Beugungseffizienzen B von 1, von 0,9, von 0,8 und 0,7 aufgetragen. Dabei bedeutet S die Breite eines Steges 22 am Grund der Lücke 23. In Figur 3 ist zum besseren Verständnis auch die korrespondierende Breite L der Lücke 23 eingezeichnet, es gilt TP=S+L. Aus Figur 6 ist ersichtlich, daß bei einem Flankenwinkel γ von etwa 70° die maximale Beugungseffizienz B=1 innerhalb einer sehr großen Toleranz für S:TP von etwa 0,55 bis 0,7 bei h=160 bis 200 nm erzielbar ist. Bei einer noch guten Beugungseffizienz B von 0,9 liegt der mögliche Bereich von S:TP sogar zwischen 0,50 und 0,75 und die Stufenhöhe h zwischen 160 und 210 nm. Figur 6 zeigt, daß bei einem Flankenwinkel γ von etwa 70° auch bei einem Verhältnis S:TP=0,5 noch eine relativ hohe Beugungseffizienz B erreicht wird. Derartige Maßstäbe mit S:L=1:1 lassen sich relativ einfach herstellen.

Die relative Beugungseffizienz B wurde in den Figuren 4 bis 6 als Vergleichsfaktor gewählt, da die absolute Beugungseffizienz vom Material der reflektierenden Schicht 26 abhängig ist.

Bei der erfindungsgemäßen Positionsmeßeinrichtung ist die Beugungseffizienz B für einen relativ großen Bereich des Einfallswinkels α sehr groß. Die zulässige Abweichung vom Littrow-Winkel α=arc sin λ/2TP ist somit sehr groß und kann um ±4° abweichen, was die Montage der Positionsmeßeinrichtung erleichtert.

Die Erhöhung der Beugungseffizienz bei einem erfindungsgemäß ausgebildeten Maßstab 2 ist besonders gravierend, wenn die reflektierende Oberfläche 26 aus Chrom besteht. Chrom hat an sich einen kleineren Reflexionsgrad als Gold und Titannitrid (TiN). Man würde somit erwarten, daß auch die Beugungseffizienz eines mit Gold oder TiN beschichteten Maßstabes 2 höher ist als eines mit Chrom beschichteten Maßstabes 2. Es hat sich aber gezeigt, daß die Beugungseffizienz bei einem erfindungsgemäß ausgebildeten Maßstabes 2, der mit Chrom beschichtet ist, höher ist als bei einem Maßstab 2, der mit Gold oder TiN beschichtet ist.

Bei dem beschriebenen Beispiel ist der Maßstab 2 erfindungsgemäß ausgebildet. Es liegt auch im Rahmen der Erfindung, den Maßstab und/oder eine Abtastplatte (Strahlteiler 12) in der beschriebenen Weise auszubilden.

Die Erfindung kann bei Längen- und Winkelmeßsystemen Anwendung finden.

## Patentansprüche

1. Positionsmeßeinrichtung mit einer Beleuchtungsquelle (11) und einer Detektoreinrichtung (20) zur Messung der Lage zweier relativ zueinander beweglicher Objekte mit Hilfe von Lichtstrahlenbeugung an wenigstens einem Beugungsgitter (2), wobei
- die Teilungsperiode (TP) des Beugungsgitters (2) annähernd gleich oder kleiner der Wellenlänge (λ) des auftreffenden Strahlenbündels (13, 14) ist;
- die Stege (22) im Querschnitt zumindest annähernd trapezförmig ausgebildet sind, **dadurch gekennzeichnet, dass**
- dieses Beugungsgitter (2) ein reflektierendes Reliefgitter mit in Meßrichtung (X) abwechselnd angeordneten Stegen (22) und Lücken (23) ist, und
- der Flankenwinkel (γ) der Stege (22) zur Erhöhung der Beugungseffizienz 70° ± 10° beträgt.

2. Positionsmeßeinrichtung nach Anspruch 1, **dadurch gekennzeichnet, daß** das auf das Beugungsgitter (2) auftreffende Strahlenbündel (13, 14) linear polarisiert ist.

3. Positionsmeßeinrichtung nach Anspruch 2, **dadurch gekennzeichnet, daß** die Polarisation des Strahlenbündels (13, 14) so ausgerichtet ist, daß der elektrisch polarisierte Anteil des Strahlenbündels (13, 14) in der Einfallsebene (X, Y) liegt, und dieser Anteil bezüglich des Beugungsgitters (2) der transversal magnetischen Mode entspricht, welche in Meßrichtung (X) ausgerichtet ist.

4. Positionsmeßeinrichtung nach einem der Ansprüche 1 bis 3, **dadurch gekennzeichnet, daß** die reflektierende Oberfläche des Beugungsgitters (2) aus elektrisch leitendem Material besteht.

5. Positionsmeßeinrichtung nach Anspruch 4, **dadurch gekennzeichnet, daß** die reflektierende Oberfläche des Beugungsgitters (2) aus Chrom besteht.

6. Positionsmeßeinrichtung nach einem der vorhergehenden Ansprüche, **dadurch gekennzeichnet, daß** zumindest die Stege des Beugungsgitters aus Silizium, insbesondere aus 110-Silizium bestehen.

7. Positionsmeßeinrichtung nach Anspruch 6, **dadurch gekennzeichnet, daß** das Beugungsgitter aus Silizium besteht, in dem die Lücken eingeätzt sind, und dessen reflektierende Oberfläche eine Schicht aus elektrisch leitfähigem Material ist.

8. Positionsmeßeinrichtung nach einem der vorhergehenden Ansprüche, **dadurch gekennzeichnet, daß** auf das Beugungsgitter (2) mehrere Strahlenbündel (13, 14) zumindest annähernd unter dem Eintrittswinkel α=arc sin λ/2TP auftreffen, dort derart gebeugt werden, daß erste Beugungsordnungen (15, 16) jeweils unter einem Austrittswinkel β=α austreten, nachfolgend einander überlagert werden und miteinander interferieren.

## Claims

1. Position measuring device with a lighting source (11) and a detector means (20) for measuring the position of two objects that are movable relative to one another by means of light beam diffraction at at least one diffraction grating (2), wherein
• the graduation period (TP) of the diffraction grating (2) is almost equal to or smaller than the wavelength (λ) of the incident beam (13, 14);
• the lands (22) are at least approximately trapezoid in cross-section,
**characterised in that**
• this diffraction grating (2) is a reflecting relief grating with lands (22) and gaps (23) arranged alternately in the measurement direction (X), and
• the flank angle (γ) of the lands (22) amounts to 70° ± 10° to increase the diffraction efficiency.

2. Position measuring device according to Claim 1, **characterised in that** the beam (13, 14) incident on the diffraction grating (2) is linearly polarised.

3. Position measuring device according to Claim 2, **characterised in that** the polarisation of the beam (13, 14) is oriented so that the electrically polarised component of the beam (13, 14) lies in the plane of incidence (X, Y), and with respect to the diffraction grating (2) this component corresponds to the transversally magnetic mode, which is oriented in the measurement direction (X).

4. Position measuring device according to one of Claims 1 to 3, **characterised in that** the reflecting surface of the diffraction grating (2) is made of electrically conductive material.

5. Position measuring device according to Claim 4, **characterised in that** the reflecting surface of the diffraction grating (2) is made of chromium.

6. Position measuring device according to one of the preceding claims, **characterised in that** at least the lands of the diffraction grating are made of silicon, in particular 110 silicon.

7. Position measuring device according to Claim 6, **characterised in that** the diffraction grating is made of silicon, in which the gaps are etched, and its reflecting surface is a layer of electrically conductive material.

8. Position measuring device according to one of the preceding claims, **characterised in that** several beams (13, 14) strike the diffraction grating (2) at least approximately at the angle of incidence α=arc sine λ/2TP, are diffracted there such that first orders (15, 16) occur respectively at an angle of emergence β=α, and are then superposed one on the other and interfere with each other.

## Revendications

1. Dispositif optique de mesure de positions comportant une source d'éclairage (11) et un dispositif de détection (20) pour mesurer la position de deux objets mobiles l'un par rapport à l'autre au moyen de la diffraction des rayons lumineux sur au moins un réseau de diffraction (2), dans lequel :
- la période de graduation (TP) du réseau de diffraction (2) est sensiblement égale ou plus petite que la longueur d'onde (λ) du faisceau de rayons incident (13, 14),
- les barrettes (22) de la grille (2) présentent en coupe une forme au moins à peu près trapézoïdale,
**caractérisé en ce que** le réseau de diffraction (2) est un réseau en relief réfléchissant avec, dans la direction de mesure (X), des barrettes (22) et des creux (23) alternés, l'angle de flancs (γ) des barrettes étant de 70° ± 10° pour augmenter l'efficience de la diffraction.

2. Dispositif optique de mesure de positions selon la revendication 1, **caractérisée en ce que** le faisceau de rayons (13, 14) qui frappe le réseau de diffraction (2) est polarisé linéairement.

3. Dispositif optique de mesure de positions selon la revendication 2, **caractérisée en ce que** la polymérisation du faisceau de rayons (13, 14) est conçue de manière que la fraction polarisée électriquement de ce faisceau (13, 14) se trouve dans le plan d'incidence (X; Y), cette fraction correspondant en ce qui concerne le réseau de diffraction (2) au mode magnétique transversal, qui est orienté selon la direction de mesure (X).

4. Dispositif optique de mesure de positions selon une des revendications 1 à 3, **caractérisée en ce que** la surface réfléchissante du réseau de diffraction (2) est faite d'un matériau électriquement conducteur.

5. Dispositif optique de mesure de positions selon la revendication 4, **caractérisée en ce que** la surface réfléchissante du réseau de diffraction (2) est en chrome.

6. Dispositif optique de mesure de positions selon une des revendications précédentes, **caractérisée en ce qu'**au moins les barrettes du réseau de diffraction sont en silicium, notamment en silicium 110.

7. Dispositif optique de mesure de positions selon la revendication 6, **caractérisée en ce que** le réseau de diffraction est en silicium, dans lequel sont gravés les creux, tandis que la surface réfléchissante est constituée par une couche d'un matériau conducteur de l'électricité.

8. Dispositif optique de mesure de positions selon une des revendications précédentes, **caractérisée en ce que** le réseau de diffraction (2) est frappé par plusieurs faisceaux de rayons (13, 14) sous un angle d'incidence au moins proche de α = arc sin λ/2TP avec réfraction de manière que les premiers ordres de diffraction (15, 16) s'effectuent tous deux sous un angle de diffraction β = α, pour se superposer ensuite avec interférence entre eux.
